# EUROPÄISCHE PATENTSCHRIFT

(11) **EP 3 663 669 B1**
(45) Veröffentlichungstag und Bekanntmachung des Hinweises auf die Patenterteilung: **21.07.2021**
(21) Anmeldenummer: 19212765.2
(22) Anmeldetag: 02.12.2019
(51) Int. Cl.: F24H 1/06, F23D 3/40, F23D 14/24, F23L 9/00, F23C 7/00

(54) **BRENNKAMMERBAUGRUPPE**
COMBUSTION CHAMBER MODULE
MODULE DE CHAMBRE DE COMBUSTION

(30) Priorität: 07.12.2018 DE 102018131253
(43) Veröffentlichungstag der Anmeldung: 10.06.2020
(73) Patentinhaber: Eberspächer Climate Control Systems GmbH, 73730 Esslingen (DE)
(72) Erfinder: Humburg, Michael, 73035 Göppingen (DE); Blaschke, Walter, 73779 Deizisau (DE)
(74) Vertreter: Ruttensperger Lachnit Trossin Gomoll

(56) Entgegenhaltungen:
- WO-A1-96/12916
- DE-A1-102006 024 221
- DE-A1-102012 101 576

## Beschreibung

Die vorliegende Erfindung betrifft eine Brennkammerbaugruppe für ein brennstoffbetriebenes Fahrzeugheizgerät, umfassend ein Brennkammergehäuse mit einem Brennkammerboden und einer in Richtung einer Gehäuselängsachse langgestreckten und die Gehäuselängsachse umgebend angeordneten Brennkammerumfangswand, wobei der Brennkammerboden und die Brennkammerumfangswand eine Brennkammer begrenzen, ein poröses Verdampfermedium an einer der Brennkammer zugewandten Innenseite der Brennkammerumfangswand oder/und des Brennkammerbodens, sowie eine Brennstoffzuführleitung zum Einspeisen von flüssigem Brennstoff in das poröse Verdampfermedium. Die vorliegende Erfindung betrifft ferner ein Verfahren zum Betreiben eines Fahrzeugheizgeräts.

Aus der DE 102 00 524 C1 ist eine Brennkammerbaugruppe bekannt, bei welcher am Brennkammerboden ein zur Gehäuselängsachse konzentrisch angeordneter Verbrennungslufteinleitansatz mit einer Mehrzahl von Verbrennungslufteinleitöffnungen in einer Umfangswand desselben angeordnet ist. An einer einer Brennkammer zugewandten Innenseite einer Brennkammerumfangswand ist ein poröses Verdampfermedium vorgesehen, in welches flüssiger Brennstoff eingespeist wird. Der aus dem Verdampfermedium in Gasform in die Brennkammer abgegebene Brennstoff vermischt sich mit der aus dem Verbrennungslufteinleitansatz in die Brennkammer eintretenden Verbrennungsluft, so dass ein Gemisch aus Verbrennungsluft und Brennstoff erzeugt wird, bei dessen Verbrennung Wärme transportierendes Verbrennungsabgas entsteht.

Eine Brennkammerbaugruppe gemäß dem Oberbegriff des Anspruchs 1 ist aus der WO 96/12916 A1 bekannt. Eine weitere Brennkammerbaugruppe ist aus der DE 10 2006 024 221 A1 bekannt. Bei dieser bekannten Brennkammerbaugruppe endet das an der Innenseite der Brennkammerumfangswand angeordnete poröse Verdampfermedium bündig mit dem von dem Brennkammerboden sich erstreckenden Verbrennungslufteinleitansatz, welcher in seiner Umfangswandung alle ersten Verbrennungslufteinleitöffnungen der ersten Verbrennungsluftzuführanordnung aufweist.

Es ist die Aufgabe der vorliegenden Erfindung, eine Brennkammerbaugruppe bzw. ein Verfahren zum Betreiben eines mit einer derartigen Brennkammerbaugruppe ausgestatteten Fahrzeugheizgeräts vorzusehen, bei welchen der Schadstoffanteil, insbesondere der Stickoxidanteil und der Kohlenmonoxidanteil, in dem bei der Verbrennung entstehenden Abgas gemindert ist.

Gemäß einem ersten Aspekt wird diese Aufgabe gelöst durch eine Brennkammerbaugruppe für ein brennstoffbetriebenes Fahrzeugheizgerät gemäß Anspruch 1. Diese Brennkammerbaugruppe umfasst:
- ein Brennkammergehäuse mit einem Brennkammerboden und einer in Richtung einer Gehäuselängsachse langgestreckten und die Gehäuselängsachse umgebend angeordneten Brennkammerumfangswand, wobei der Brennkammerboden und die Brennkammerumfangswand eine Brennkammer begrenzen,
- ein poröses Verdampfermedium an einer der Brennkammer zugewandten Innenseite der Brennkammerumfangswand oder/und des Brennkammerbodens,
- eine Brennstoffzuführleitung zum Einspeisen von flüssigem Brennstoff in das poröse Verdampfermedium,
- eine erste Verbrennungszone mit einer ersten Verbrennungsluftzuführanordnung in Zuordnung zu dem Brennkammerboden zum Zuführen von Primärverbrennungsluft in die Brennkammer, wobei das poröse Verdampfermedium in der ersten Verbrennungszone angeordnet ist,
- eine in Richtung der Gehäuselängsachse auf die erste Verbrennungszone folgende zweite Verbrennungszone mit einer zweiten Verbrennungsluftzuführanordnung in Zuordnung zu der Brennkammerumfangswand zum Zuführen von Sekundärverbrennungsluft in axialem Abstand zur ersten Verbrennungszone in die Brennkammer.

Durch das Bereitstellen zweier Verbrennungszonen in der Brennkammer kann in der ersten Verbrennungszone, in welcher das Gemisch aus Verbrennungsluft und Brennstoff generiert und verbrannt wird, bei einer Verbrennung mit vergleichsweise hoher Temperatur der Stickoxidanteil im Verbrennungsabgas gemindert werden. Da in der ersten Verbrennungszone eine vollständige Verbrennung des darin bereitgestellten Gemisches nicht erfolgen wird, sondern ein nicht verbrannter Anteil an Brennstoff und Primärluft bzw. darin enthaltener Sauerstoff in die zweite Verbrennungszone gelangen wird und dort mit der Sekundärluft vermischt wird, kann einerseits aufgrund der Temperatur der in die zweite Verbrennungszone eingeleiteten Sekundärluft und andererseits aufgrund des größeren Gesamt-Luftanteils in dem dann zu verbrennenden Gemisch die Verbrennung in der zweiten Verbrennungszonen bei gesenkter Verbrennungstemperatur derart ablaufen, dass der Kohlenmonoxidanteil im Verbrennungsabgas gesenkt wird, so dass das die Brennkammer bzw. ein darauf folgendes Flammrohr verlassende Verbrennungsabgas sowohl einen deutlich gesenkten Stickoxidgehalt, also einen deutlich gesenkten Kohlenmonoxidgehalt aufweist.

Zum Bereitstellen der beiden Verbrennungszonen ist vorgesehen, dass die erste Verbrennungsluftzuführanordnung einen am Brennkammerboden in Richtung zur Brennkammer vorstehenden Verbrennungslufteinleitansatz umfasst, wobei in einer Umfangswand und einem zum Brennkammerboden in Richtung der Gehäuselängsachse versetzten Boden des Verbrennungslufteinleitansatzes eine Mehrzahl von ersten Verbrennungslufteinleitöffnungen vorgesehen ist, und dass die zweite Verbrennungsluftzuführanordnung in einem zum Boden des Verbrennungslufteinleitansatzes axial beabstandeten Bereich der Brennkammerumfangswand eine Mehrzahl von zweiten Verbrennungslufteinleitöffnungen umfasst.

Für eine verbesserte Durchmischung von Brennstoff und Verbrennungsluft kann vorgesehen sein, dass die erste Verbrennungsluftzuführanordnung stromaufwärts bezüglich des Verbrennungslufteinleitansatzes eine Drallerzeugungsanordnung zum Einleiten der Primärverbrennungsluft mit Drall bezüglich der Gehäuselängsachse in den Verbrennungslufteinleitansatz umfasst, oder/und dass die zweite Verbrennungsluftzuführanordnung eine die Brennkammerumfangswand umgebende Verbrennungsluftzuführkammer umfasst.

Um zu gewährleisten, dass Brennstoff nur im Bereich der ersten Verbrennungszone in die Brennkammer eingespeist wird, ist weiter vorgesehen, dass das poröse Verdampfermedium an einer Innenseite der Brennkammerumfangswand sich ausgehend vom Brennkammerboden axial bis über den Verbrennungslufteinleitansatz hinaus erstreckt, und dass die zweiten Verbrennungslufteinleitöffnungen in axialem Abstand zum porösen Verdampfermedium angeordnet sind.

Um in den beiden Verbrennungszonen definierte Verbrennungsverhältnisse einstellen zu können, welche gewährleisten, dass in den beiden Verbrennungszonen die Verbrennung jeweils mit einem für einen gesenkten Schadstoffanteil geeigneten Mischungsverhältnis von Verbrennungsluft und Brennstoff und bei für einen geringen Schadstoffanteil optimalen Temperaturen ablaufen kann, kann erfindungsgemäß vorgesehen sein, dass die erste Verbrennungsluftzuführanordnung und die zweite Verbrennungsluftzuführanordnung derart ausgebildet sind, dass 57 % bis 61 %, vorzugsweise etwa 59 %, der in die Brennkammer eingeleiteten Verbrennungsluft als Primärverbrennungsluft in die Brennkammer eintritt und 39 % bis 43 %, vorzugsweise etwa 41 %, der in die Brennkammer eingeleiteten Verbrennungsluft als Sekundärverbrennungsluft in die Brennkammer eintritt.

Die Erfindung betrifft ferner ein brennstoffbetriebenes Fahrzeugheizgerät, umfassend eine Brennkammerbaugruppe mit dem vorangehend beschriebenen Aufbau, eine Brennstoffpumpe zum Fördern von Brennstoff in die Brennstoffzuführleitung und ein Verbrennungsluftgebläse zum Fördern von Verbrennungsluft als Primärverbrennungsluft und Sekundärverbrennungsluft in die Brennkammer.

Gemäß einem weiteren Aspekt wird die eingangs genannte Aufgabe gelöst durch ein Verfahren gemäß Anspruch 5 zum Betreiben eines beispielsweise erfindungsgemäß aufgebauten Fahrzeugheizgeräts. Bei diesem Verfahren werden Verbrennungsluft und Brennstoff mit derartigen Fördermengen zu der Brennkammerbaugruppe gefördert, dass die Primärverbrennungsluft und der Brennstoff mit einem Mengenverhältnis für eine Verbrennung mit einem Lambda-Wert im Bereich von 1-1,15, vorzugsweise etwa 1, in die erste Verbrennungszone eingespeist werden.

Eine Verbrennung mit derartigem Mischungsverhältnis gewährleistet einerseits, dass eine für einen geringen Stickoxidanteil in dem Verbrennungsabgas erforderliche Verbrennungstemperatur in der ersten Verbrennungszone erreicht wird, stellt andererseits aber auch sicher, dass in der ersten Verbrennungszone keine vollständige Umsetzung des in der Primärverbrennungsluft enthaltenen Sauerstoffs und des in die erste Verbrennungszone eingespeisten Brennstoffs auftreten kann, so dass aus der ersten Verbrennungszone in die zweite Verbrennungszone strömende, nicht verbrannte Primärverbrennungsluft und nicht verbrannter Brennstoff sich mit der Sekundärverbrennungsluft mischen können und dann bei geringerer Verbrennungstemperatur zu einer im Wesentlichen vollständigen Verbrennung führen können.

Verbrennungsluft und Brennstoff werden weiter mit derartigen Fördermengen zu der Brennkammerbaugruppe gefördert, dass die Primärverbrennungsluft und Sekundärverbrennungsluft und der Brennstoff in einem Mengenverhältnis für eine Verbrennung mit einem Lambda-Wert im Bereich von 1,6 bis 1,8, vorzugsweise etwa 1,7, in die Brennkammer eingespeist werden. Dieses auf die gesamte in die Brennkammer eingeleiteten Verbrennungsluft und den gesamten in die Brennkammer eingeleiteten Brennstoff sich beziehende Mengenverhältnis gewährleistet, dass bei den in den beiden Verbrennungszonen im Wesentlichen auch in zwei Verbrennungsphasen bei unterschiedlichen Temperaturen ablaufenden Verbrennungen der Brennstoff bei gesenktem Schadstoffgehalt im Verbrennungsabgas, insbesondere geringem Stickoxidanteil und Kohlenmonoxidanteil, im Wesentlichen vollständig verbrannt werden kann.

Die vorliegende Erfindung wird nachfolgend mit Bezug auf die beiliegenden Figuren detailliert beschrieben. Es zeigt:
- Fig. 1: eine Längsschnittansicht einer Brennkammerbaugruppe für ein brennstoffbetriebenes Fahrzeugheizgerät;
- Fig. 2: eine Querschnittansicht der Brennkammerbaugruppe der Fig. 1, geschnitten längs einer Linie II-II in Fig. 1.

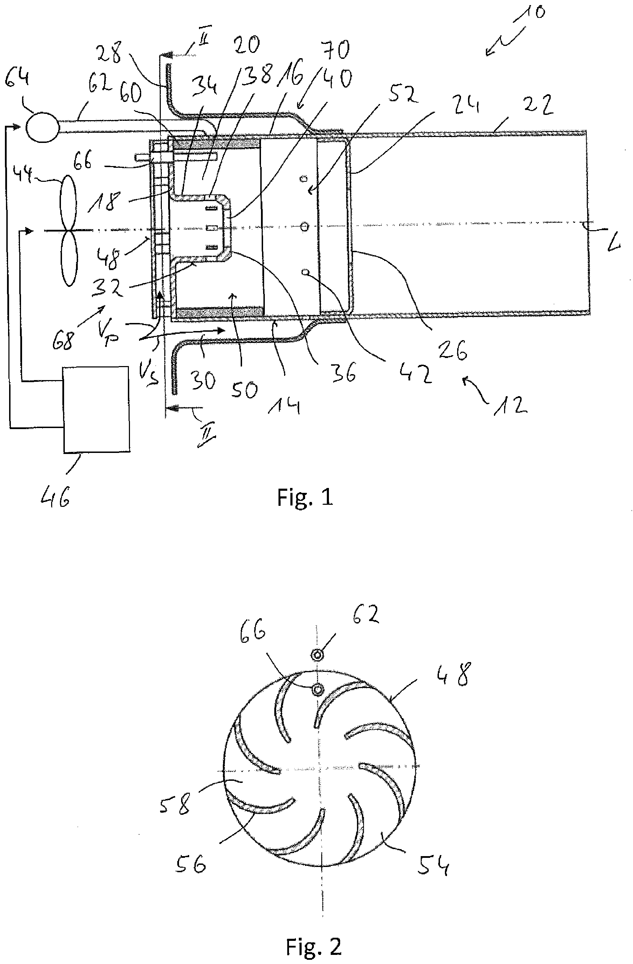

In Fig. 1 ist eine Brennkammerbaugruppe eines allgemein mit 10 bezeichneten Fahrzeugheizgeräts mit 12 bezeichnet. Die Brennkammerbaugruppe 12 umfasst ein Brennkammergehäuse 14 mit einer in Richtung einer Gehäuselängsachse L langgestreckten Brennkammerumfangswand 16 und einer an einem axialen Endbereich der Brennkammerumfangswand 16 an diese anschließenden Bodenwand 18. Die Brennkammerumfangswand 16 und die Bodenwand 18 begrenzen eine Brennkammer 20. Die Brennkammerumfangswand 16 ist im dargestellten Beispiel integral ausgebildet mit einem Flammrohr 22, wobei im Übergangsbereich zwischen der Brennkammerumfangswand 16 und dem an diese anschließenden Flammrohr 22 eine Flammblende 24 mit einer zentralen Öffnung 26 angeordnet ist.

An die Brennkammerumfangswand 20 bzw. das Flammrohr 22 ist außen eine Außenumfangswand 28 angebunden. Diese begrenzt zusammen mit der Brennkammerumfangswand 16 eine die Brennkammerumfangswand 16 bzw. die Brennkammer 20 ringartig umgebende Verbrennungsluftzuführkammer 30. Am Brennkammerboden 18 ist in einem zentralen Bereich bzw. zur Gehäuselängsachse L zentriert angeordnet ein Verbrennungslufteinleitansatz 32 vorgesehen. Eine Umfangswand 34 des Verbrennungsluftanleitansatzes schließt an den Brennkammerboden 18 an. In einem vom Brennkammerboden 18 entfernten axialen Endbereich der Umfangswand 34 des Verbrennungslufteinleitansatzes 32 schließt an diese ein Boden 36 des Verbrennungslufteinleitansatzes 32 an. Über eine Mehrzahl von in Umfangsrichtung um die Gehäuselängsachse aufeinander folgend in der Umfangswand 34 vorgesehenen ersten Verbrennungslufteinleitöffnungen 38 und eine im Boden 36 vorgesehene erste Verbrennungslufteinleitöffnung 40 ist der Verbrennungslufteinleitansatz 32 zur Brennkammer 20 offen. Über eine Mehrzahl von in Umfangsrichtung um die Gehäuselängsachse L aufeinanderfolgenden, beispielsweise in einer ringartigen Konfiguration angeordneten zweiten Verbrennungslufteinleitöffnungen 42 ist die Verbrennungsluftzuführkammer 30 zur Brennkammer 20 offen.

Zum Fördern von Verbrennungsluft in die Brennkammer 20 ist ein Verbrennungsluftgebläse 44 vorgesehen. Dieses beispielsweise als Seitenkanalgebläse ausgebildete Verbrennungsluftgebläse 44 steht unter der Ansteuerung einer Ansteueranordnung 46 und kann dazu betrieben werden, die für die Verbrennung erforderliche Verbrennungsluft zu fördern. Ein Teil der durch das Verbrennungsluftgebläse 44 geförderten Verbrennungsluft strömt als Primärverbrennungsluft V_{P} über eine Drallerzeugungsanordnung 48 in Richtung zu dem Verbrennungslufteinleitansatz 32 und über die ersten Verbrennungslufteinleitöffnungen 38, 40 in eine erste Verbrennungszone 50 der Brennkammer 20. Ein weiterer Teil bzw. der Rest der durch das Verbrennungsluftgebläse 44 geförderten Verbrennungsluft strömt als Sekundärverbrennungsluft Vs in die Verbrennungsluftzuführkammer 30 und über die zweiten Verbrennungslufteinleitöffnungen 42 in eine axial auf die erste Verbrennungszone 50 folgende zweite Verbrennungszone 52 der Brennkammer 20.

Die Drallerzeugungsanordnung 48 ist in Fig. 2 detaillierter dargestellt. Diese umfasst in Abstand zum Brennkammerboden 48 eine diesem im Wesentlichen parallel gegenüberliegende Bodenplatte 54 und eine Mehrzahl von daran mit spiralartiger Kontur in der Umfangsrichtung aufeinander folgenden Verbrennungsluftleitelementen 56. Diese können an der von der Brennkammer 20 abgewandten Rückseite des Brennkammerbodens 18 anliegen, so dass zwischen dem Brennkammerboden 18, der Bodenplatte 54 und den Verbrennungsluftleitelementen 56 jeweilige spiralartig sich erstreckende Verbrennungslufteintrittskanäle 58 gebildet sind. Die von radial außen in die Verbrennungslufteinleitkanäle 58 einströmende Primärverbrennungsluft V_{P} wird somit in eine Drallströmung umgewandelt und tritt mit Dall, also im Wesentlichen auch verwirbelt in das Innere des Verbrennungslufteinleitstutzens 32 und durch die ersten Verbrennungslufteinleitöffnungen 38, 40 in die erste Verbrennungszone 50 der Brennkammer 20 ein.

Zur Zufuhr des für die Verbrennung erforderlichen Brennstoffs in die Brennkammer 20 ist in der ersten Verbrennungszone 50 an einer der Brennkammer 20 zugewandten Innenseite der Brennkammerumfangswand 16 ein poröses Verdampfermedium 60 vorgesehen. Dieses aus Metallgestrick, Metallgewirk, Schaumkeramik oder sonstigem mit porenartiger Struktur ausgebildeten Material bereitgestellte poröse Verdampfermedium nimmt über eine Brennstoffzuführleitung 62 den von einer Brennstoffpumpe 64 geförderten flüssigen Brennstoff auf, verteilt diesen durch Kapillarförderwirkung in seinem Innenvolumenbereich und gibt den Brennstoff in der ersten Verbrennungszone 50 in gasförmigem Aggregatzustand in die Brennkammer 20 ab. Dieser in die Brennkammer 20 eingespeiste Brennstoff vermischt sich in der ersten Verbrennungszone 50 mit der über die ersten Brennstoffeinleitöffnungen 38, 40 in diese eingeleiteten Primärverbrennungsluft V_{P} und stellt in der ersten Verbrennungszone 50 somit ein zündfähiges bzw. verbrennungsfähiges Gemisch aus Brennstoff und Primärverbrennungsluft bereit. Um dieses Gemisch zu zünden und damit die Verbrennung zu starten, ist im dargestellten Beispiel am Brennkammerboden 18 ein Zündorgan 66, beispielsweise als Glühzündstift ausgebildet, getragen, so dass dessen thermisch wirksamer Bereich dem porösen Verdampfermedium mit geringem Abstand gegenüberliegt. Auch das Zündorgan 66 kann, ebenso wie die Brennstoffpumpe 64, unter der Ansteuerung der Ansteueranordnung 46 stehen, um durch geeignete Ansteuerung des Verbrennungsluftgebläses 44, der Brennstoffpumpe 64 und des Zündorgans 66 einerseits in der Brennkammer 20 das für eine Verbrennung geeignete Gemisch aus Brennstoff und Verbrennungsluft bereitzustellen, andererseits am Beginn eines Verbrennungsbetriebs durch Erregen des Zündorgans 66 dieses Gemisch in der ersten Verbrennungszone 50 zu zünden.

Bei dem vorangehend mit Bezug auf die Fig. 1 beschriebenen Aufbau einer Brennkammerbaugruppe 12 umfasst eine für die Zufuhr der Primärverbrennungsluft V_{P} bereitgestellte erste Verbrennungsluftzuführanordnung 68 neben dem Verbrennungsluftgebläse 44 die Drallerzeugungsanordnung 48 und den am Brennkammerboden 18 vorgesehenen Verbrennungslufteinleitansatz 32 mit den darin ausgebildeten ersten Verbrennungslufteinleitöffnungen 38, 40. Eine für die Zufuhr der Sekundärverbrennungsluft Vs zur zweiten Verbrennungszone 52 vorgesehene zweite Verbrennungsluftzuführanordnung umfasst neben dem Verbrennungsluftgebläse 44 die Brennstoffzuführkammer 30 und die eine Verbindung zwischen der Brennstoffzuführkammer 30 und der Brennkammer 20 in der zweiten Verbrennungszone 52 bereitstellenden zweiten Verbrennungslufteinleitöffnungen 42.

Die beiden Verbrennungsluftzuführanordnungen 68, 70 sind mit den verschiedenen in diesen bereitgestellten und von der Primärverbrennungsluft V_{P} bzw. der Sekundärverbrennungsluft Vs zu durchströmenden Volumenbereichen und Öffnungen so gestaltet, dass im Betrieb des Verbrennungsluftgebläses 44 die durch dieses geförderte Verbrennungsluft derart in den Strömungsanteil Primärverbrennungsluft V_{P} und den Strömungsanteil Sekundärverbrennungsluft Vs aufgeteilt wird, dass 57% bis 61%, vorzugsweise etwa 59%, der gesamten durch das Verbrennungsluftgebläse 44 geförderten Verbrennungsluft als Primärverbrennungsluft V_{P} in die erste Verbrennungszone 50 eingeleitet wird, während die in die zweite Verbrennungszone 52 eingeleitete Sekundärverbrennungsluft Vs einen Anteil von 39% bis 43%, vorzugsweise etwa 41% der gesamten von dem Verbrennungsluftgebläse 44 geförderten Verbrennungsluft beträgt. Da das Verbrennungsluftgebläse 44 sowohl den Strom der Primärverbrennungsluft V_{P}, als auch den Strom der Sekundärverbrennungsluft Vs generiert, wird diese Aufteilung in die beiden Ströme im Wesentlichen durch den im Bereich einer jeweiligen Verbrennungsluftzuführanordnung 68, 70 bereitgestellten Strömungswiderstand definiert bzw. eingestellt.

Im Verbrennungsbetrieb werden die Brennstoffpumpe 64 und das Verbrennungsluftgebläse 44 weiter derart angesteuert, dass die in die erste Verbrennungszone 50 eingeleitete Primärverbrennungsluft V_{P} und der in das poröse Verdampfermedium 60 und über dieses in die erste Verbrennungszone 50 eingespeiste Brennstoff in einem Mengenverhältnis bereitgestellt werden, welches zu einer Verbrennung mit einem Lambda-Wert im Bereich von 1 bis 1,15 vorzugsweise 1, führt bzw. führen würde. Dies bedeutet, dass grundsätzlich in der ersten Verbrennungszone 50 Brennstoff und Primärverbrennungsluft V_{P} vollständig miteinander verbrannt werden könnte, ohne dass nicht verbrannter Brennstoff in dem die Brennkammer 20 dann verlassenden Verbrennungsabgas mitgeführt werden würde. Aufgrund der kontinuierlichen Zufuhr von Brennstoff und Primärverbrennungsluft V_{P} existiert jedoch ein entsprechender kontinuierlicher Strom von in der ersten Verbrennungszone 50 generiertem Gemisch aus der ersten Verbrennungszone 50 in die zweite Verbrennungszone 52. Dies bedeutet, dass nicht das gesamte in der ersten Verbrennungszone 50 mit einem im Wesentlichen stöchiometrischen Mischungsverhältnis bereitgestellte Gemisch in der ersten Verbrennungszone 50 verbrannt wird. Ein Teil des in der ersten Verbrennungszone 50 generierten Gemisches tritt aus der im Wesentlichen auch im axialen Endbereich des porösen Verdampfermediums 50 endenden ersten Verbrennungszone 50 in die dann folgende zweite Verbrennungszone 52 ein und wird dort mit der über die zweiten Verbrennungslufteinleitöffnungen 42 zugeführten Sekundärverbrennungsluft Vs vermischt. Es entsteht somit ein Luft- bzw. Sauerstoffüberschuss, was in der zweiten Verbrennungszone 52 bzw. auch weiter stromabwärts im dann folgenden Flammrohr 22 zu einer überstöchiometrischen Verbrennung führt. Insgesamt werden die Verbrennungsluft und der Brennstoff in einem Mengenverhältnis in die Brennkammer 20 eingeleitet, welches einer Verbrennung mit einem Lambda-Wert im Bereich von etwa 1,7 entspricht bzw. zu einer derartigen Verbrennung führt.

Mit dem vorangehend beschriebenen Betrieb der Brennkammerbaugruppe 12 bzw. des diese umfassenden Verbrennungsluftgebläses 10 wird in der ersten Verbrennungszone mit dem dort bereitgestellten, im Wesentlichen stöchiometrischen Gemisch aus Brennstoff und Primärverbrennungsluft Vp eine Verbrennungstemperatur im Bereich von 1.000 bis 1.050°C erreicht. Eine derart hohe Verbrennungstemperatur führt dazu, dass in dem dabei entstehenden Verbrennungsabgas ein nur geringer Stickoxidanteil enthalten ist. Die unter Umströmung der Brennkammerumfangswand 16 in die zweite Verbrennungszone 52 eingeleitete Sekundärverbrennungsluft Vs wird beim Eintritt in die zweite Verbrennungszone 52 eine Temperatur von einigen 100°C unter der Verbrennungstemperatur in der ersten Verbrennungszone 50, beispielsweise eine Temperatur im Bereich von 400 bis 500°C aufweisen. Auch unter Berücksichtigung des vorangehend angegebenen Mengenverhältnisses von Primärverbrennungsluft V_{P} zu Sekundärverbrennungsluft Vs führt dies in der zweiten Verbrennungszone 52 zu einer bei deutlich geringerer Temperatur im Bereich von etwa 700 bis 800°C ablaufenden Verbrennung. Diese bei geringerer Temperatur ablaufende Verbrennung führt zu einer deutlichen Absenkung des Kohlenmonoxidanteils im Abgas, so dass mit dem bei zwei verschiedenen Verbrennungstemperaturen in den beiden Verbrennungszonen 50, 52 ablaufenden zweistufigen Verbrennungsprozess einerseits ein geringer Stickoxidanteil, andererseits ein geringer Kohlenmonoxidanteil im Verbrennungsabgas erreicht werden kann. Maßgeblich sind hierfür einerseits die definierte Aufteilung des Verbrennungsluftstroms in die Primärverbrennungsluft V_{P} und die Sekundärverbrennungsluft Vs, um in den beiden Verbrennungszonen 50, 52 die jeweils erforderlichen Verbrennungsluft- bzw. Sauerstoffmengen bereitstellen zu können, und andererseits die Bereitstellung eines im Wesentlichen stöchiometrischen oder leicht überstöchiometrischen Gemisches aus Primärverbrennungsluft V_{P} und Brennstoff in der ersten Verbrennungszone.

Durch die Einstellung der Strömungsverhältnisse bzw. Strömungswiderstände und somit die Aufteilung des Verbrennungsluftstroms in die Primärverbrennungsluft V_{P} und die Sekundärverbrennungsluft V s wird es möglich, die Verbrennungstemperatur insbesondere in der zweiten Verbrennungszone 52 zu beeinflussen bzw. für einen jeweiligen Typ eines Fahrzeugheizgeräts 10 beispielsweise auch abhängig von der durch dieses bereitzustellenden Heizleistung geeignet einzustellen. Dabei entspricht die bauliche Ausgestaltung der Brennkammerbaugruppe 10 insbesondere mit den die Anbindung an andere Systembereiche bereitstellenden Komponenten einem Standardaufbau, so dass die erfindungsgemäß aufgebaute Brennkammerbaugruppe 12 als Austausch-Brennkammerbaugruppe in bereits existierende Fahrzeugheizgeräte integriert werden kann, um auch dort den in zwei Verbrennungszonen definiert ablaufenden Verbrennungsbetrieb und damit einen geminderten Schadstoffausstoß erreichen zu können.

## Patentansprüche

1. Brennkammerbaugruppe für ein brennstoffbetriebenes Fahrzeugheizgerät, umfassend:
- ein Brennkammergehäuse (14) mit einem Brennkammerboden (18) und einer in Richtung einer Gehäuselängsachse (L) langgestreckten und die Gehäuselängsachse (L) umgebend angeordneten Brennkammerumfangswand (16), wobei der Brennkammerboden (18) und die Brennkammerumfangswand (16) eine Brennkammer (20) begrenzen,
- ein poröses Verdampfermedium (60) an einer der Brennkammer (20) zugewandten Innenseite der Brennkammerumfangswand (16) oder/und des Brennkammerbodens (18),
- eine Brennstoffzuführleitung (62) zum Einspeisen von flüssigem Brennstoff in das poröse Verdampfermedium (60),
- eine erste Verbrennungszone (50) mit einer ersten Verbrennungsluftzuführanordnung (68) in Zuordnung zu dem Brennkammerboden (18) zum Zuführen von Primärverbrennungsluft (Vp) in die Brennkammer (20), wobei das poröse Verdampfermedium (60) in der ersten Verbrennungszone (50) angeordnet ist,
- eine in Richtung der Gehäuselängsachse (L) auf die erste Verbrennungszone (50) folgende zweite Verbrennungszone (52) mit einer zweiten Verbrennungsluftzuführanordnung (70) in Zuordnung zu der Brennkammerumfangswand (16) zum Zuführen von Sekundärverbrennungsluft (Vs) in axialem Abstand zur ersten Verbrennungszone (50) in die Brennkammer (20), wobei die erste Verbrennungsluftzuführanordnung (68) einen am Brennkammerboden (18) in Richtung zur Brennkammer (20) vorstehenden Verbrennungslufteinleitansatz (32) umfasst, wobei in einer Umfangswand (34) und einem zum Brennkammerboden (18) in Richtung der Gehäuselängsachse (L) versetzten Boden (36) des Verbrennungslufteinleitansatzes (32) eine Mehrzahl von ersten Verbrennungslufteinleitöffnungen (38, 40) vorgesehen ist, und wobei die zweite Verbrennungsluftzuführanordnung (70) in einem zum Boden (36) des Verbrennungslufteinleitansatzes (32) axial beabstandeten Bereich der Brennkammerumfangswand (16) eine Mehrzahl von zweiten Verbrennungslufteinleitöffnungen (42) umfasst,
wobei die zweiten Verbrennungslufteinleitöffnungen (42) in axialem Abstand zum porösen Verdampfermedium (60) angeordnet sind,
**dadurch gekennzeichnet, dass** das
poröse Verdampfermedium (60) an einer Innenseite der Brennkammerumfangswand (16) sich ausgehend vom Brennkammerboden (18) axial bis über den Verbrennungslufteinleitansatz (32) hinaus erstreckt.

2. Brennkammerbaugruppe nach Anspruch 1, **dadurch gekennzeichnet, dass** die erste Verbrennungsluftzuführanordnung (68) stromaufwärts bezüglich des Verbrennungslufteinleitansatzes (32) eine Drallerzeugungsanordnung (48) zum Einleiten der Primärverbrennungsluft (V_{P}) mit Drall bezüglich der Gehäuselängsachse (L) in den Verbrennungslufteinleitansatz (32) umfasst, oder/und dass die zweite Verbrennungsluftzuführanordnung (70) eine die Brennkammerumfangswand (16) umgebende Verbrennungsluftzuführkammer (30) umfasst.

3. Brennkammerbaugruppe nach einem der vorangehenden Ansprüche, **dadurch gekennzeichnet, dass** die erste Verbrennungsluftzuführanordnung (68) und die zweite Verbrennungsluftzuführanordnung (70) derart ausgebildet sind, dass 57 % bis 61 %, vorzugsweise etwa 59 %, der in die Brennkammer (20) eingeleiteten Verbrennungsluft als Primärverbrennungsluft (V_{P}) in die Brennkammer (20) eintritt und 39 % bis 43 %, vorzugsweise etwa 41 %, der in die Brennkammer (20) eingeleiteten Verbrennungsluft als Sekundärverbrennungsluft (Vs) in die Brennkammer (20) eintritt.

4. Brennstoffbetriebenes Fahrzeugheizgerät, umfassend eine Brennkammerbaugruppe (12) nach einem der vorangehenden Ansprüche, eine Brennstoffpumpe (64) zum Fördern von Brennstoff in die Brennstoffzuführleitung (62) und ein Verbrennungsluftgebläse (44) zum Fördern von Verbrennungsluft als Primärverbrennungsluft (V_{P}) und Sekundärverbrennungsluft (Vs) in die Brennkammer (20).

5. Verfahren zum Betreiben eines Fahrzeugheizgeräts, das Fahrzeugheizgerät umfassend:
- eine Brennkammerbaugruppe (12), umfassend:
- ein Brennkammergehäuse (14) mit einem Brennkammerboden (18) und einer in Richtung einer Gehäuselängsachse (L) langgestreckten und die Gehäuselängsachse (L) umgebend angeordneten Brennkammerumfangswand (16), wobei der Brennkammerboden (18) und die Brennkammerumfangswand (16) eine Brennkammer (20) begrenzen,
- ein poröses Verdampfermedium (60) an einer der Brennkammer (20) zugewandten Innenseite der Brennkammerumfangswand (16) oder/und des Brennkammerbodens (18),
- eine Brennstoffzuführleitung (62) zum Einspeisen von flüssigem Brennstoff in das poröse Verdampfermedium (60),
- eine erste Verbrennungszone (50) mit einer ersten Verbrennungsluftzuführanordnung (68) in Zuordnung zu dem Brennkammerboden (18) zum Zuführen von Primärverbrennungsluft (V_{P}) in die Brennkammer (20), wobei das poröse Verdampfermedium (60) in der ersten Verbrennungszone (50) angeordnet ist,
- eine in Richtung der Gehäuselängsachse (L) auf die erste Verbrennungszone (50) folgende zweite Verbrennungszone (52) mit einer zweiten Verbrennungsluftzuführanordnung (70) in Zuordnung zu der Brennkammerumfangswand (16) zum Zuführen von Sekundärverbrennungsluft (Vs) in axialem Abstand zur ersten Verbrennungszone (50) in die Brennkammer (20)
- eine Brennstoffpumpe (64) zum Fördern von Brennstoff in die Brennstoffzuführleitung (62), und
- ein Verbrennungsluftgebläse (44) zum Fördern von Verbrennungsluft als Primärverbrennungsluft (V_{P}) und Sekundärverbrennungsluft (Vs) in die Brennkammer (20),
bei welchem Verfahren Verbrennungsluft und Brennstoff mit derartigen Fördermengen zu der Brennkammerbaugruppe (12) gefördert werden, dass die Primärverbrennungsluft (Vp) und der Brennstoff mit einem Mengenverhältnis für eine Verbrennung mit einem Lambda-Wert im Bereich von 1-1,15, vorzugsweise etwa 1, in die erste Verbrennungszone (50) eingespeist werden und dass die Primärverbrennungsluft (V_{P}) und Sekundärverbrennungsluft (Vs) und der Brennstoff in einem Mengenverhältnis für eine Verbrennung mit einem Lambda-Wert im Bereich von 1,6 bis 1,8, vorzugsweise etwa 1,7, in die Brennkammer (20) eingespeist werden.

6. Verfahren nach Anspruch 5, **dadurch gekennzeichnet, dass** die Brennkammerbaugruppe (12) gemäß einem der Ansprüche 1-3 ausgebildet ist.

## Claims

1. Combustion chamber assembly unit for a fuel-operated vehicle heating device, comprising:
- a combustion chamber housing (14) with a combustion chamber bottom (18) and with a combustion chamber circumferential wall (16) elongated in the direction of a housing longitudinal axis (L) and arranged enclosing the housing longitudinal axis (L), wherein the combustion chamber bottom (18) and the combustion chamber circumferential wall (16) define a combustion chamber (20),
- a porous evaporator medium (60) on an inner side of the combustion chamber circumferential wall (16) or/and of the combustion chamber bottom (18), which inner side faces the combustion chamber (20),
- a fuel feed line (62) for feeding liquid fuel into the porous evaporator medium (60),
- a first combustion zone (50) with a first combustion air feed device (68) associated with the combustion chamber bottom (18) for feeding primary combustion air (V_{P}) into the combustion chamber (20), wherein the porous evaporator medium (60) is arranged in the first combustion zone (50),
- a second combustion zone (52) following the first combustion zone (50) in the direction of the housing longitudinal axis (L) with a second combustion air feed device (70) associated with the combustion chamber circumferential wall (16) for feeding secondary combustion air (V_{S}) into the combustion chamber (20) at an axially spaced location from the first combustion zone (50), wherein the first combustion air feed device (68) comprises a combustion air introduction attachment (32) projecting in the direction of the combustion chamber (20) at the combustion chamber bottom (18), wherein a plurality of first combustion air introduction openings (38, 40) are provided in a circumferential wall (34) and in a bottom (36) of the combustion air introduction attachment (32), which bottom is offset in the direction of the housing longitudinal axis (L) in relation to the combustion chamber bottom (18), and
wherein the second combustion air feed device (70) comprises a plurality of second combustion air introduction openings (42) in an area of the combustion chamber circumferential wall (16), which area is located at an axially spaced location in relation to the bottom (36) of the combustion air introduction attachment (32), wherein the second combustion air introduction openings (42) are arranged at an axially spaced location from the porous evaporator medium (60), **characterized in that** the porous evaporator medium (60) extends on an inner side of the combustion chamber circumferential wall (16), starting from the combustion chamber bottom (18), axially beyond the combustion air introduction attachment (32).

2. Combustion chamber assembly unit in accordance with claim 1, **characterized in that** the first combustion air feed device (68) comprises, upstream in relation to the combustion air introduction attachment (32), a swirl-generating device (48) for introducing the primary combustion air (V_{P}) with a swirl in relation to the housing longitudinal axis (L) into the combustion air introduction attachment (32), or/and that the second combustion air feed device (70) comprises a combustion air feed chamber (30) enclosing the combustion chamber circumferential wall (16).

3. Combustion chamber assembly unit in accordance with one of the preceding claims, **characterized in that** the first combustion air feed device (68) and the second combustion air feed device (70) are configured such that 57% to 61% and preferably about 59% of the combustion air introduced into the combustion chamber (20) enters the combustion chamber (20) as primary combustion air (V_{P}) and 39% to 43% and preferably about 41% of the combustion air introduced into the combustion chamber (20) enters the combustion chamber (20) as secondary combustion air (Vs).

4. Fuel-operated vehicle heating device, comprising a combustion chamber assembly unit (12) in accordance with one of the preceding claims, a fuel pump (64) for feeding fuel into the fuel feed line (62) and a combustion air blower (44) for feeding combustion air as primary combustion air (V_{P}) and as secondary combustion air (V_{S}) into the combustion chamber (20).

5. Process for operating a vehicle heating device, the vehicle heating device comprising:
- a combustion chamber assembly unit (12), comprising:
- a combustion chamber housing (14) with a combustion chamber bottom (18) and with a combustion chamber circumferential wall (16) elongated in the direction of a housing longitudinal axis (L) and arranged enclosing the housing longitudinal axis (L), wherein the combustion chamber bottom (18) and the combustion chamber circumferential wall (16) define a combustion chamber (20),
- a porous evaporator medium (60) on an inner side of the combustion chamber circumferential wall (16) or/and of the combustion chamber bottom (18), which inner side faces the combustion chamber (20),
- a fuel feed line (62) for feeding liquid fuel into the porous evaporator medium (60),
- a first combustion zone (50) with a first combustion air feed device (68) associated with the combustion chamber bottom (18) for feeding primary combustion air (V_{P}) into the combustion chamber (20), wherein the porous evaporator medium (60) is arranged in the first combustion zone (50),
- a second combustion zone (52) following the first combustion zone (50) in the direction of the housing longitudinal axis (L) with a second combustion air feed device (70) associated with the combustion chamber circumferential wall (16) for feeding secondary combustion air (V_{S}) into the combustion chamber (20) at an axially spaced location from the first combustion zone (50),
- a fuel pump (64) for feeding fuel into the fuel feed line (62), and
- a combustion air blower (44) for feeding combustion air as primary combustion
air (V_{P}) and as secondary combustion air (V_{S}) into the combustion chamber (20), in which process combustion air and fuel are fed to the combustion chamber assembly unit (12) at such flow rates that the primary combustion air (V_{P}) and the fuel are fed into the first combustion zone (50) at a quantity ratio for a combustion with a lambda value in the range of 1-1.15 and preferably about 1, and that the primary combustion air (V_{P}) and the secondary combustion air (V_{S}) and the fuel are fed into the combustion chamber (20) at a quantity ratio for a combustion with a lambda value in the range of 1.6 to 1.8, preferably about 1.7.

6. Process in accordance with claim 5, **characterized in that** the combustion chamber assembly unit (12) is configured according to one of claims 1 to 3.

## Revendications

1. Unité d'assemblage de chambre de combustion pour un dispositif de chauffage de véhicule fonctionnant au combustible, comprenant :
- un boîtier de chambre de combustion (14) avec un fond de chambre de combustion (18) et avec une paroi circonférentielle de chambre de combustion (16) allongée dans la direction d'un axe longitudinal de boîtier (L) et disposée en entourant l'axe longitudinal de boîtier (L), dans lequel le fond de chambre de combustion (18) et la paroi circonférentielle de chambre de combustion (16) définissent une chambre de combustion (20),
- un milieu évaporateur poreux (60) sur un côté intérieur de la paroi circonférentielle de la chambre de combustion (16) ou/et du fond de chambre de combustion (18), lequel côté intérieur fait face à la chambre de combustion (20),
- une conduite d'alimentation en combustible (62) pour alimenter en combustible liquide le milieu évaporateur poreux (60),
- une première zone de combustion (50) avec un premier dispositif d'alimentation en air de combustion (68) associé au fond de chambre de combustion (18) pour alimenter la chambre de combustion (20) en air de combustion primaire (V_{P}), le milieu évaporateur poreux (60) étant disposé dans la première zone de combustion (50),
- une deuxième zone de combustion (52) faisant suite à la première zone de combustion (50) dans la direction de l'axe longitudinal de boîtier (L), avec un deuxième dispositif d'alimentation en air de combustion (70) associé à la paroi circonférentielle de la chambre de combustion (16) pour amener de l'air de combustion secondaire (V_{S}) dans la chambre de combustion (20) à une distance axiale de la première zone de combustion (50), dans lequel le premier dispositif d'alimentation en air de combustion (68) comprend une fixation d'introduction d'air de combustion (32) faisant saillie dans la direction de la chambre de combustion (20) au niveau du fond de chambre de combustion (18), dans lequel une pluralité de premières ouvertures d'introduction d'air de combustion (38, 40) sont prévues dans une paroi circonférentielle (34) et dans un fond (36) du connecteur d'introduction d'air de combustion (32), lequel fond est décalé dans la direction de l'axe longitudinal de boîtier (L) par rapport au fond de chambre de combustion (18), et
dans lequel le deuxième dispositif d'alimentation en air de combustion (70) comprend une pluralité de deuxièmes ouvertures d'introduction d'air de combustion (42) dans une zone de la paroi circonférentielle de la chambre de combustion (16), laquelle zone est située à un emplacement axialement espacé par rapport au fond (36) du connecteur d'introduction d'air de combustion (32), dans lequel les deuxièmes ouvertures d'introduction d'air de combustion (42) sont disposées à un emplacement axialement espacé du milieu évaporateur poreux (60), **caractérisé en ce que** le milieu évaporateur poreux (60) s'étend sur un côté intérieur de la paroi circonférentielle de la chambre de combustion (16), en partant du fond de chambre de combustion (18), axialement au-delà du connecteur d'introduction d'air de combustion (32).

2. Unité d'assemblage de chambre de combustion selon la revendication 1, **caractérisée en ce que** le premier dispositif d'alimentation en air de combustion (68) comprend, en amont par rapport à l'accessoire d'introduction d'air de combustion (32), un dispositif de génération de tourbillon (48) pour introduire l'air de combustion primaire (V_{P}) avec un tourbillon par rapport à l'axe longitudinal de boîtier (L) dans le connecteur d'introduction d'air de combustion (32), ou/et **en ce que** le deuxième dispositif d'alimentation en air de combustion (70) comprend une chambre d'alimentation en air de combustion (30) entourant la paroi circonférentielle de la chambre de combustion (16).

3. Unité d'assemblage de chambre de combustion selon l'une des revendications précédentes, **caractérisée en ce que** le premier dispositif d'alimentation en air de combustion (68) et le deuxième dispositif d'alimentation en air de combustion (70) sont configurés de telle sorte que 57% à 61% et de préférence environ 59% de l'air de combustion introduit dans la chambre de combustion (20) entre dans la chambre de combustion (20) en tant qu'air de combustion primaire (V_{P}) et 39% à 43% et de préférence environ 41% de l'air de combustion introduit dans la chambre de combustion (20) entre dans la chambre de combustion (20) en tant qu'air de combustion secondaire (Vs).

4. Dispositif de chauffage de véhicule fonctionnant au combustible, comprenant une unité d'assemblage de chambre de combustion (12) selon l'une des revendications précédentes, une pompe à combustible (64) pour l'alimentation en combustible dans la conduite d'alimentation en combustible (62) et une soufflante d'air de combustion (44) pour l'alimentation en air de combustion en tant qu'air de combustion primaire (V_{P}) et en tant qu'air de combustion secondaire (V_{S}) dans la chambre de combustion (20).

5. Procédé pour opérer un dispositif de chauffage de véhicule, le dispositif de chauffage de véhicule comprenant :
- une unité d'assemblage de chambre de combustion (12), comprenant :
- un boîtier de chambre de combustion (14) avec un fond de chambre de combustion (18) et avec une paroi circonférentielle de chambre de combustion (16) allongée dans la direction d'un axe longitudinal de boîtier (L) et disposée en entourant l'axe longitudinal de boîtier (L), dans lequel le fond de chambre de combustion (18) et la paroi circonférentielle de chambre de combustion (16) définissent une chambre de combustion (20),
- un milieu évaporateur poreux (60) sur un côté intérieur de la paroi circonférentielle de la chambre de combustion (16) ou/et du fond de chambre de combustion (18), lequel côté intérieur fait face à la chambre de combustion (20),
- une conduite d'alimentation en combustible (62) pour alimenter en combustible liquide le milieu évaporateur poreux (60),
- une première zone de combustion (50) avec un premier dispositif d'alimentation en air de combustion (68) associé au fond de chambre de combustion (18) pour alimenter la chambre de combustion (20) en air de combustion primaire (V_{P}), le milieu évaporateur poreux (60) étant disposé dans la première zone de combustion (50),
- une deuxième zone de combustion (52) faisant suite à la première zone de combustion (50) dans la direction de l'axe longitudinal de boîtier (L) avec un deuxième dispositif d'alimentation en air de combustion (70) associé à la paroi circonférentielle (16) de la chambre de combustion pour l'alimentation en air de combustion secondaire (V_{S}) dans la chambre de combustion (20) à une distance axiale de la première zone de combustion (50),
- une pompe à combustible (64) pour alimenter en combustible la conduite d'alimentation en combustible (62), et
- un ventilateur d'air de combustion (44) pour alimenter de l'air de combustion en tant qu'air de combustion primaire (V_{P}) et en tant qu'air de combustion secondaire (V_{S}) dans la chambre de combustion (20),
dans lequel procédé l'air de combustion et le combustible sont alimentés à l'unité d'assemblage de chambre de combustion (12) à des débits tels que l'air de combustion primaire (V_{P}) et le combustible sont alimentés dans la première zone de combustion (50) à un rapport de quantité pour une combustion avec une valeur lambda dans la plage de 1-1,15 et de préférence d'environ 1, et que l'air de combustion primaire (V_{P}) et l'air de combustion secondaire (V_{S}) et le combustible sont alimentés dans la chambre de combustion (20) à un rapport de quantité pour une combustion avec une valeur lambda dans la plage de 1,6 à 1,8, de préférence d'environ 1,7.

6. Procédé selon la revendication 5, **caractérisé en ce que** l'unité d'assemblage de chambre de combustion (12) est configurée selon l'une des revendications 1 à 3.
